## Europäisches Patentamt
## European Patent Office
## Office européen des brevets

(11) Numéro de publication: **0 034 518**

**A1**

# (12) DEMANDE DE BREVET EUROPEEN

(21) Numéro de dépôt: **81400146.7**

(22) Date de dépôt: **30.01.81**

(51) Int. Cl.³: **A 41 D 3/04**
//A41D27/20, B62J17/00

(30) Priorité: **12.02.80 FR 8003028**

(43) Date de publication de la demande:
**26.08.81 Bulletin 81/34**

(84) Etats contractants désignés:
**AT BE CH DE GB IT LI LU NL SE**

(71) Demandeur: **ETABLISSEMENTS LEON DUHAMEL**
**Rue Léon Duhamel**
**F-62440 Harnes(FR)**

(72) Inventeur: **Servat, Claude**
**214, avenue des Eglantiers**
**F-59910 Bondues(FR)**

(74) Mandataire: **Tony-Durand, Serge**
**Cabinet Tony-Durand 22, Boulevard Voltaire**
**F-75011 Paris(FR)**

(54) **Vêtement imperméable coupe-pluie pour cyclistes et procédé pour la fabrication de ce vêtement.**

(57) — Vêtement imperméable coupe-pluie pour cyclistes.

— Ce vêtement est caractérisé par l'agencement dans le bas du dos, de deux pochettes extérieures ainsi que d'une poche intérieure (11) dont le fond (11a) est commun avec celui des deux pochettes, la poche 11 étant dimensionnée pour permettre d'y replier la totalité du vêtement et pourvue de deux paires de languettes d'accrochage (12a, 12b) aux guidons de la bicyclette lorsque le vêtement est replié dans la poche (11).

— Ce vêtement coupe-pluie est particulièrement commode pour le cycliste, qui peut aisément loger des objets tels qu'une casquette dans les pochettes extérieurs, et accrocher le vêtement replié dans la poche intérieure à son guidon lorsqu'il en n'a pas besoin.

FIG_2

1

<u>Vêtement imperméable coupe-pluie pour cyclistes et procédé</u>
<u>pour la fabrication de ce vêtement.</u>

La présente invention a pour objet un vêtement
imperméable coupe-pluie pour cyclistes.

On connaît des vêtements coupe-pluie pour cyclistes,
repliables de façon classique dans une poche située au bas
du dos, et qui comportent des lanières élastiques destinées
à être nouées autour de la taille du cycliste lorsque le
vêtement est replié dans la poche dorsale.

Ces vêtements contraignent les cyclistes à les
porter même lorsqu'ils ne sont pas utilisés, après avoir
noué les lanières autour de leur taille. De plus, ils ne
sont pas prévus pour recevoir des objets utiles aux cyclistes, tels que casquettes par exemple.

Conformément à l'invention, ce vêtement est
caractérisé en ce qu'il comporte, dans le bas du dos, au
moins deux pochettes extérieures et une poche intérieure
dont le fond est commun avec celui des deux pochettes, la
poche intérieure étant dimensionnée pour permettre d'y
replier la totalité du vêtement et étant pourvue d'un moyen
d'accrochage à la bicyclette, par exemple au guidon de
celle-ci.

Les deux pochettes extérieures peuvent recevoir
divers objets de petites dimensions utiles au cycliste
pendant son entraînement, par exemple une casquette.

Lorsque le cycliste n'a pas besoin de revêtir ce vêtement imperméable, il peut le replier aisément dans sa totalité dans la poche intérieure, puis l'accrocher au guidon de sa bicyclette, sans être obligé de le nouer autour de sa taille.

Suivant un mode de réalisation de l'invention, le moyen d'accrochage à la bicyclette consiste en deux paires de languettes fixées sur les bords de la poche à chacune des extrémités de cette dernière, chaque paire pouvant former une boucle fermée autour du guidon de la bicyclette ou d'une autre partie tubulaire de celle-ci, grâce à un élément de fermeture tel qu'un système de bouton-pression.

Par ailleurs, le vêtement comporte le long des côtés et des manches, un tissu aéré bi-extensible, permettant d'évacuer la transpiration du cycliste, sans que pour autant la pluie puisse traverser cette partie aérée.

D'autres particularités et avantages de l'invention apparaîtront au cours de la description qui va suivre. Aux dessins annexés, on a représenté un mode de réalisation non limitatif du vêtement selon l'invention.

- La figure 1 est une vue en élévation de dos du vêtement imperméable coupe-pluie selon l'invention.

- La figure 2 est une vue en élévation de face du vêtement de la figure 1, les parties droite et gauche du vêtement étant écartées pour montrer la poche intérieure et les languettes d'accrochage à la bicyclette.

- La figure 3 est une vue en perspective du vêtement des figures 1 et 2 replié entièrement à l'intérieur de la poche prévue dans le bas du dos.

- La figure 4 est un schéma illustrant la première étape du procédé de fabrication du vêtement coupe-pluie selon l'invention, à savoir la fixation du rabat des pochettes extérieures au haut du dos.

- La figure 5 est un schéma analogue à la figure 4 illustrant la seconde étape de la fabrication, à savoir la fixation du fond constitutif des pochettes extérieures au haut du dos.

- La figure 6 est un schéma illustrant la troisième étape de la fabrication, c'est-à-dire la fixation du bas du dos à la pièce constitutive des pochettes extérieures.

- La figure 7 est un schéma illustrant la quatrième étape du procédé, c'est-à-dire l'assemblage du haut et du bas du dos.

- La figure 8 montre l'étape suivante, constituée par la fixation des pièces de fermeture du rabat sur les pochettes extérieures, les étapes ultérieures de la fabrication n'étant pas représentées.

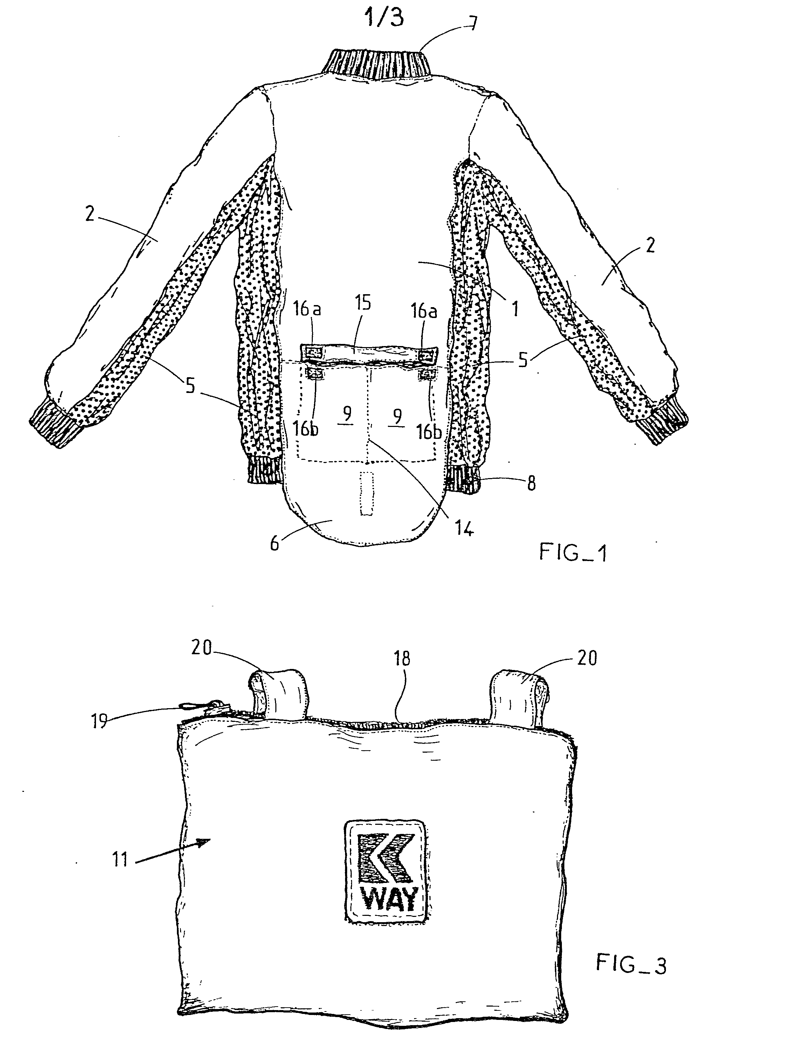

Le vêtement représenté aux figures 1 à 3 est un vêtement imperméable coupe-pluie pour cycliste, dont le dos 1, les manches 2 ainsi que les parties avant droite 3 et gauche 4 sont constituées d'un tissu synthétique enduit imperméable, fixé le long des côtés et des manches 2, à un tissu aéré 5 permettant d'évacuer la transpiration du cycliste.

Par ailleurs, le dos 1 est prolongé par une extension 6 de forme arrondie, destinée à recouvrir les reins du cycliste pendant qu'il est penché sur son guidon.

De plus, les extrémités des manches 2, le col 7 et la taille 8 sont formés en un tissu côtes élastique de façon connue en soi, de façon à éviter que le vêtement ne flotte au vent.

Conformément à l'invention, le vêtement comporte, dans le bas du dos 1, deux pochettes extérieures 9 et une poche intérieure 11 dont le fond 11a est commun avec celui des deux pochettes 9. La poche intérieure 11 s'étend sur une surface égale à la surface totale des deux pochettes 9, et est dimensionnée pour permettre d'y replier la totalité du vêtement.

L'invention prévoit également un moyen d'accrochage à la bicyclette du vêtement, lorsque celui est replié dans sa totalité à l'intérieur de la poche 11 (figure 3). Dans l'exemple illustré aux dessins, ce moyen d'accrochage consiste en deux paires de languettes 12a, 12b, fixées près des extrémités opposées des bords de l'ouverture de la poche 11, chaque paire 12a, 12b pouvant former une boucle fermée 20 grâce à un élément de fermeture tel qu'un système de bouton-pression 13a, 13b. Lorsque le vêtement n'est pas replié dans la poche 11, les languettes 12a, 12b sont rabattues à l'intérieur de celle-ci.

Suivant une autre particularité de l'invention, les pochettes extérieures 9 sont formées par couture d'une pièce de tissu sur le .fond 11a de la poche 11, suivant une ligne de couture verticale 14, et un rabat 15 est prévu pour fermer ces pochettes 9.

Ce rabat est pourvu d'un moyen de fixation aux extrémités des bords des pochettes 9, par exemple des plaquettes 16a, 16b fixées respectivement à l'intérieur du rabat 15 et sur les faces extérieures des poches 9, et constituées par exemple du tissu commercialement connu sous la marque "Velcro".

Les bords des parties de devant 3 et 4 du vêtement sont également pourvus de bandes de fermeture 17, de préférence en "Velcro".

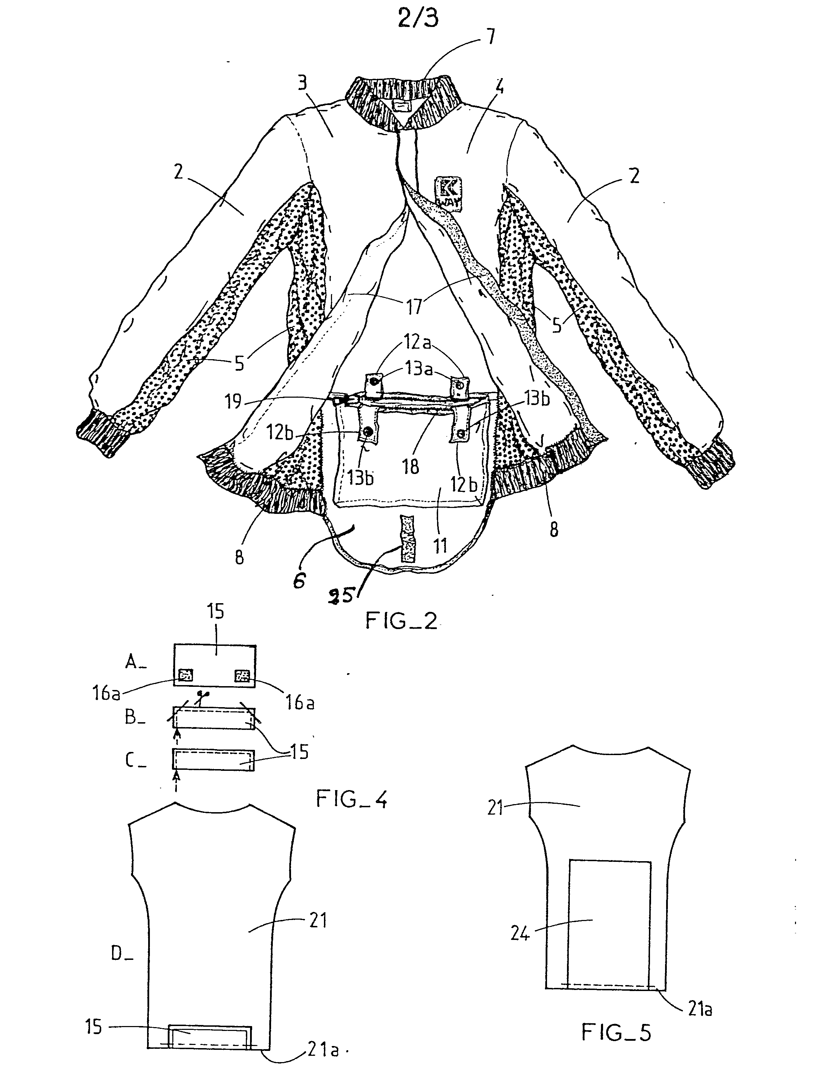

Le procédé de fabrication du vêtement qui vient d'être décrit est illustré en partie aux figures 4 à 8, et cette fabrication s'effectue comme suit.

Le dos étant composé d'un "haut" et d'un "bas" référencés respectivement 21 et 22 aux figures 4 à 8, on découpe trois pièces de tissu devant constituer respectivement le fond des pochettes extérieures, le fond de la poche intérieure et le rabat 15 de fermeture des pochettes extérieures 9.

On pose les pièces de "Velcro" sur le rabat 15, comme illustré à la partie supérieure A de la figure 4. Puis on pique le rabat 15 comme schématisé à la partie B de la figure 4, on dégage, on retourne et on surpique le rabat, comme illustré à la partie C de la figure 4.

Ensuite on pose par couture le rabat 15 sur le bord inférieur 21a du dos 21, comme visible à la partie inférieure D de la figure 4.

On coud le long de ce même bord 21a la pièce de tissu 24 destinée à constituer le fond des pochettes extérieures 9, cette opération étant schématisée à la figure 5.

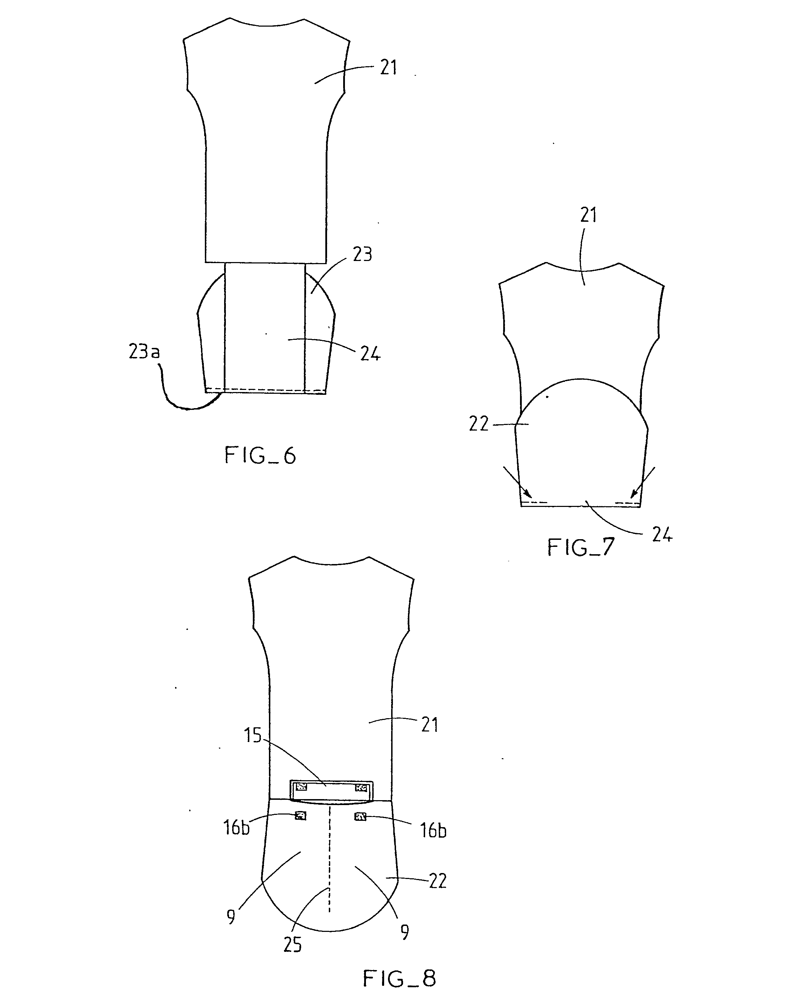

Ensuite, le long de l'extrémité du fond rectangulaire 24 opposée à l'extrémité qui a été cousue au bord 21a du dos 21, on assemble le bord 23a du bas 23 du dos, comme représenté à la figure 6. Puis comme illustré à la figure 7, on assemble le haut 21 et le bas 23 du dos, le long de leurs bords respectifs 21a et 23a, en laissant une ouverture, le fond 22 étant alors replié. On pose ensuite les pièces de "Velcro" 16b sur le bas du dos 23, comme visible à la figure 8.

On exécute une nervure le long du bas du dos 23 et le long du haut de la poche présentant l'ouverture, et on effectue ensuite un surpiquage 25 le long du milieu de la poche afin de former les deux pochettes extérieures 9.

La suite des opérations n'a pas été représentée et s'effectue de la manière suivante : on pose une fermeture à glissière 18 avec son curseur 19 le long de la pièce de tissu devant constituer le fond de la poche intérieure 11, on fixe les deux paires de languettes ou pattes 12a, 12b, sur ce fond, puis on assemble celui-ci par ses côtés avec le fond des pochettes extérieures 9 afin de former la poche intérieure 11, et on glisse les pattes ou languettes 12a, 12b à l'intérieur de la poche 11.

Le vêtement est alors terminé.

Lorsque le cycliste désire accrocher le vêtement au guidon de sa bicyclette, il lui est aisé de replier la totalité du vêtement à l'intérieur de la poche 11 pour obtenir l'article représenté à la figure 3 ; puis, le bord de l'ouverture de la poche 11 étant pourvu de la fermeture à glissière 18 équipée du curseur 19 à double tirette, le cycliste sort les languettes 12a, 12b de la poche 11, ferme celle-ci, puis boucle les languettes grâce aux boutons-pressions 13a, 13b, de façon à obtenir des boucles fermées 20 attachables à sa bicyclette.

Ce vêtement est particulièrement commode pour la pratique du sport cycliste, le cycliste n'étant pas obligé de porter le vêtement replié dans la poche 11 autour de sa taille, grâce aux boucles 20 d'accrochage.

L'invention n'est pas limitée à la forme de réalisation décrite et peut comporter des variantes d'exécution. Ainsi, les languettes d'accrochage 12a, 12b pourraient être remplacées par tout autre moyen convenable permettant un accrochage sur une partie tubulaire de la bicyclette.

On pourrait également ménager trois pochettes extérieures au lieu des deux pochettes 9.

On remarquera que l'agencement des éléments d'accrochage 16a, 16b aux extrémités du rabat 15, et non tout le long de celui-ci, facilite au cycliste l'accès aux poches 9 pendant la pratique de ce sport.

On notera aussi que l'extension arrondie 6 est revêtue intérieurement d'une bande médiane verticale 25, de préférence en "Velcro", destinée à s'accrocher sur le cuissard du cycliste, ce cuissard étant réalisé en tissu acrylique légèrement gratté. Cela évite que l'extension 6 ne flotte au vent en découvrant les reins du cycliste.

REVENDICATIONS

1 - Vêtement imperméable coupe-pluie pour cycliste, caractérisé en ce qu'il comporte, dans le bas du dos, au moins deux pochettes extérieures (9) et une poche intérieure (11) dont le fond 11a est commun avec celui des deux pochettes (9), la poche intérieure (11) étant dimensionnée pour permettre d'y replier la totalité du vêtement et étant pourvue d'un moyen d'accrochage (12a, 12b) à la bicyclette, par exemple au guidon de celle-ci.

2 - Vêtement coupe-pluie selon la revendication 1, caractérisé en ce que le moyen d'accrochage à la bicyclette consiste en deux paires de languettes (12a, 12b) fixées sur les bords de la poche (11) à chacune des extrémités de cette dernière, chaque paire (12a, 12b) pouvant former une boucle fermée autour par exemple du guidon de la bicyclette, grâce à un élément de fermeture tel qu'un bouton-pression (13a, 13b).

3 - Vêtement coupe-pluie selon l'une des revendications 1 et 2, caractérisé en ce que les pochettes extérieures (9) sont formées par couture d'une pièce de tissu sur le fond (11a) de la poche intérieure (11), et un rabat (15) est prévu pour fermer ces pochettes (9), ce rabat étant pourvu d'un moyen de fixation aux extrémités des bords de celles-ci, tel que des plaquettes de "Velcro" (16a, 16b).

4 - Procédé de fabrication d'un vêtement coupe-pluie selon l'une des revendications 1 à 3, caractérisé en ce que, le dos étant composé d'un "haut" (21) et d'un "bas" (22), on coud tout d'abord le rabat (15) de fermeture des pochettes extérieures (9) sur le bord inférieur (21a) du haut (21) du dos, on coud le long de ce même bord (21a) une pièce de tissu (24) destinée à constituer les pochettes (9), on coud ensuite l'extrémité opposée de cette pièce (24) au bord 23a du bas du dos (23), on assemble le bord inférieur (21a) du haut (21) du dos et le bord supérieur (23a) du bas (23) du dos en repliant la pièce de tissu (24) et en laissant libre une ouverture d'entrée, on pose sur le bas (23) du dos et sur le rabat (15) les moyens de fermeture 16b des pochettes (9), on effectue au moins un surpiquage (25) de la poche afin de la diviser en deux pochettes (9), on pose la fermeture à glissière (18) ainsi que les deux paires de languettes (12a, 12b), sur une seconde pièce de tissu destinée à former le fond de la poche intérieure (11), et on assemble ce fond par ses côtés au fond des pochettes extérieures (9) afin de former la poche intérieure (11) entre ces deux fonds.

0034518

FIG_1

FIG_3

2/3

0034518

FIG_2

FIG_4

FIG_5

FIG_6

FIG_7

FIG_8

**0034518**

Office européen
des brevets

**RAPPORT DE RECHERCHE EUROPEENNE**

Numéro de la demande

EP 81 40 0146

| | **DOCUMENTS CONSIDERES COMME PERTINENTS** | | **CLASSEMENT DE LA DEMANDE (Int. Cl.³)** |
|---|---|---|---|
| Catégorie | Citation du document avec indication, en cas de besoin, des parties pertinentes | Revendica-tion concernée | |
| | GB - A - 1 561 459 (COSMOS INTER-NATIONAL GARMENT MANUFACTURERS LIMITED)<br><br>* Page 1, lignes 65-98; page 2, lignes 1-36; figures *<br><br>-- | 1,3 | A 41 D 3/04//<br> 27/20<br>B 62 J 17/00 |
| | FR - E - 81695/FR - A - 1 278 695 (J. BRISSON)<br><br>* En entier *<br><br>-- | 1 | |
| A | BE - A - 828 605 (VELO MOTO SERVICE)<br><br>* Page 2, alinéas 3-8; page 3, alinéas 1-4; page 4, les quatre derniers alinéas; page 5 en entier; page 6, alinéa 1; revendications;figures *<br><br>-- | 1 | **DOMAINES TECHNIQUES RECHERCHES (Int. Cl.³)**<br><br>A 41 D<br>B 62 J |
| A | DE - C - 487 489 (TH. WITT)<br><br>* En entier *<br><br>-- | 2 | |
| A | GB - A - 309 731 (A. PEARCE)<br><br>* Page 2, lignes 9-92; figures * <br><br>-- | 1,2 | **CATEGORIE DES DOCUMENTS CITES** |
| A | FR - A - 1 393 397 (L'ESQUIMAU)<br><br>* Page 1, colonne 1, les deux derniers alinéas; colonne 2, en entier; page 2, colonne 1; alinéas 1-3; figure 1 *<br><br>---- | 1 | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| | Le présent rapport de recherche a été établi pour toutes les revendications | | & membre de la même famille. document correspondant |

| Lieu de la recherche<br>La Haye | Date d'achèvement de la recherche<br>13-05-1981 | Examinateur<br>GARNIER |
|---|---|---|

OEB Form 1503.1 06.78